# EUROPEAN PATENT APPLICATION

(11) **EP 1 259 053 A1**
(43) Date of publication of application: **20.11.2002**
(21) Application number: 02010658.9
(22) Date of filing: 13.05.2002
(51) Int. Cl.: H04M 1/725, H04M 1/66

(54) **Radio communication device**

(30) Priority: 15.05.2001 GB 0111842
(71) Applicant: MOTOROLA, INC., Schaumburg, IL 60196 (US)
(72) Inventor: Cole, Zoe Susan, Basingstroke, Hampshire RG22 5RN (GB)
(74) Representative: Treleven, Colin

(57) **Abstract**

There is provided a method for managing an activity schedule of a radio communication device 2 by scheduling, in advance, switching of the device into an inactive mode and switching back to an active mode. The method comprises the steps of introducing into memory 32 data defining the beginning and the end of the inactive mode period. During the inactive mode period all incoming calls will be stacked in a list or diverted to a voicemail.

There is also provided a radio communication device 2 comprising a memory 32 for storing the data defining inactive mode period or periods, a controller 20, and a user interface. The user interface is typically a keypad 44 and a display screen 42 used for introducing the data and for modifying it. The controller 20, basing on the data stored in the memory 32, controls switching of the device 2 into each desired mode at the proper time.

## Description

### Technical Field

The present invention relates to radio communication devices. In particular, it relates to a method of managing an activity schedule of a radio communication device.

### Background

A large variety of radio communication devices, henceforth "communication devices", are known in the prior art. Examples of these are mobile phones, and portable- or mobile (PMR) radios. Some personal digital assistants (PDAs) and lap top computers also have radio links to connect them to other devices and networks.

In known radio communication devices of the prior art, the user of the device can switch the device to an inactive mode by pressing a key or special combination of keys. When the device stays in the inactive mode, incoming calls do not activate the device. Instead the incoming calls are quietly stacked in a list, or diverted to a voicemail. The communication device is maintained silent until the button is pressed again.

This prior art method of managing the divert function depends on the user remembering to activate it. The inventor has found that this may lead to unwanted situations in an operational environment. The user can easily forget to press the button to inactivate the device before the meeting. In such a situation, incoming calls will cause disturbances. Furthermore, the user may forget to switch off the "divert" mode after the meeting. If this were to happen, then the calls will not be listened to at the earliest opportunity. When the device stays too long in the inactive mode, the list of stored calls becomes unnecessarily longer and finally can fill up the memory.
Prior art arrangements are known from published patent applications GB-A-2297884, WO-A-9933305, FR-A-2760312 and GB-A-2324225, US-A-5509015, JP-A-080149560, WO-A-0145280 (published 21 June 2001, after the priority date of the present application).

### Summary of the Invention

It is an object of the present invention to provide a novel method and device for managing an activity schedule of a radio communication device which overcomes the disadvantages of the prior art.

In accordance with the present invention, there is thus provided a method for managing an activity schedule of a radio communication device. The management is done by scheduling in advance the switching of the device into an inactive mode and back to an active mode. The method comprises the steps of introducing data defining the beginning and the end of the inactive mode period into the device's memory. During the inactive mode period, all incoming calls are stacked in a list or diverted to a voicemail.

In accordance with another aspect of the present invention, there is provided a radio communication device comprising a memory for storing data defining an inactive mode period or periods, a controller and a user interface. The user interface is typically a display screen and a keypad used for introducing and modifying the data. The controller controls switching the device into desired mode at the proper time, based on the data stored in the memory. During the inactive mode period, the radio communication device is adapted such that all incoming calls are stacked in a list or diverted to a voicemail.

The advantage of the present invention is that it helps to adapt the activity schedule of the device to the time schedule of its user. Automatic switching into each desired mode avoids calls that would disturb the user, and avoids filling up the memory.

### Brief description of the drawings

The present invention will be understood and appreciated more fully from the following detailed description taken in conjunction with the drawing, in which:

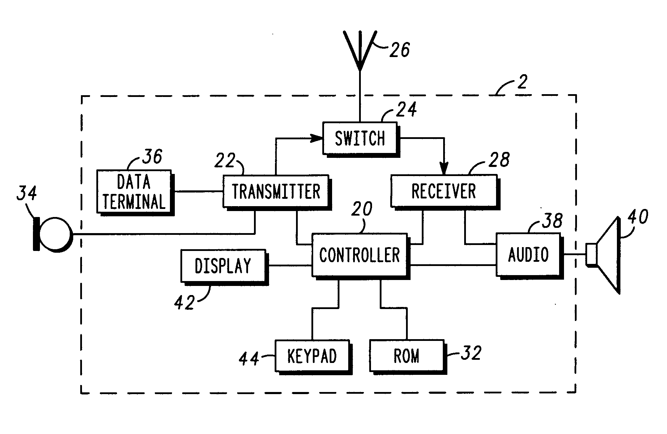

Fig. 1 is a schematic illustration of a communication device operative in accordance with the present invention.

### Detailed description of the preferred embodiment

A method of managing activity schedule of a radio communication device is provided. The method is based on scheduling in advance the switching of the communication device into an inactive mode at a beginning of defined period. At the end of this defined period, the device is switched back into an active mode. The method comprises the steps of introducing, to a memory of the device, data on the beginning and the end of the inactive mode period. By scheduling the changes of activity of the device, the user can adapt the activity schedule of the device to his/her own time schedule. During the inactive mode period, all incoming calls are either stacked in a list, or are diverted to a voicemail.

The data defining the beginning of the inactive mode period can be a date, an hour and a minute. The data defining the end of the inactive mode period can be either a duration of the period or a date and time, defined in the same way as for the beginning of the period.

In the memory of the device, the data defining more than one inactive mode period can be stored. The data can be changed dynamically, or can be deleted by the device's user.

The data defining the inactive mode period can be loaded from an internal organiser. This can be done by assigning an inactive mode period to some previously defined events. The data may also be loaded from an external organiser, such as a personal digital assistant (PDA) or a computer. The data can also be introduced manually, using the keypad and the display screen.

It is possible to manually switch the device between modes at any moment. This manual 'override' allows a user to retain control over the operating mode. If, for example, a meeting finishes early, the user can switch the device to an active mode, before the scheduled end of the meeting.

Figure 1 shows an embodiment of a communication device 2 in accordance with the present invention. The communication device 2 of figure 1 can transmit speech from a user of the device. The communication device 2 comprises a microphone 34, which provides a signal for transmission. Transmission circuit 22 transmits the signal from the microphone. Transmission circuit 22 transmits via switch 24 and antenna 26.

The communication device 2 also has a controller 20 and a memory 32. Controller 20 may be a microprocessor.

The communication device 2 of figure 1 also comprises a display screen 42 and keypad 44, which serve as part of the user interface circuitry of the communication device. At least the keypad 44 portion of the user interface circuitry is activatable by the user. Voice activation of the communication device, or other means of interaction with a user, may also be employed.

Signals received by the communication device are routed by the switch 24 to receiving circuitry 28. From there, the received signals are routed to controller 20 and audio processing circuitry 38. A loudspeaker 40 is connected to audio circuit 38. Loudspeaker 40 forms a further part of the user interface.

A data terminal 36 may be provided. Terminal 36 provides a signal comprising data for transmission by transmitter circuit 22, switch 24 and antenna 26.

In operation, the communication device 2 is capable of storing in the memory 32 the data defining the beginning and the end of the inactive mode period. On the basis of the data stored in the memory 32, the controller 20 switches the device 2 into the inactive mode at the beginning of the inactive mode period and back into the active mode at its end.

During the inactive mode period, all incoming calls are stacked in a list or diverted to a voicemail.

The display screen 42 and the keypad 44 of the communication device 2 can be used for manually introducing the data, and for dynamically changing or deleting the data.

The present invention has provided a radio communication device and a method of managing its activity that substantially alleviates the aforementioned problems.

## Claims

1. A method of managing an activity schedule of a radio communication device, by scheduling in advance a switching of said device into an inactive mode and a switching back to an active mode, according to a time schedule of a user, the method comprising the steps of:
- introducing data on a beginning of an inactive mode period to a memory; and
- introducing to said memory data on an end of said inactive mode period;
wherein, during said inactive mode period, all incoming calls are stacked in a list and/or diverted to a voicemail.

2. A method according to claim 1, wherein said data on the beginning of said inactive mode period is a date, an hour and a minute and said data on the end of said inactive mode period is a duration of said inactive mode period.

3. A method according to claim 1 wherein said data on the beginning of said inactive mode period is a date, an hour and a minute, and said data on the end of said inactive mode period is a date, an hour and a minute.

4. A method according to claim 2 or claim 3, wherein said memory is adapted to store data on more than one said inactive mode period.

5. A method according to any of claims 2 - 4, wherein said data on the beginning and/or the end of said inactive mode period can be dynamically changed by a user of said communication device.

6. A method according to any of claims 2 - 5, wherein said data on the beginning and/or the end of said inactive mode period can be loaded from an internal and/or an external organiser.

7. A radio communication device comprising a keypad, a display screen and a memory operably coupled to a controller, said memory storing a time schedule of a user of said communication device,
said keypad and said display screen being operable to assign an inactive mode period to an event of said time schedule,
said controller being adapted to switch said communication device to an inactive mode at a beginning of, and to an active mode at an end of, said inactive mode period,
wherein, during said inactive mode period, all incoming calls are stacked in a list and/or diverted to a voicemail.

8. A radio communication device according to claim 7, wherein said data on the beginning and the end of said inactive mode period can be:
a) manually introduced to said memory of said radio communication device using said keypad and said display screen; and/or
b) displayed on said display screen and dynamically changed by said user of said radio communication device.

9. A radio communication device according to claim 7, wherein said data on the beginning and the end of said inactive mode period can be loaded from an external organiser.

10. A radio communication device according to any of claims 7-9, wherein said memory can store data on more than one said inactive mode period.
